# EUROPEAN PATENT APPLICATION

(11) **EP 4 670 880 A1**
(43) Date of publication of application: **31.12.2025**
(21) Application number: 23924026.0
(22) Date of filing: 22.02.2023
(51) Int. Cl.: B23B 51/00

(54) **DRILL**

(71) Applicant: Mitsubishi Materials Corporation, Tokyo 100-8117 (JP)
(72) Inventor: SATO Akira, Tokyo 100-8117 (JP)
(74) Representative: Hoffmann Eitle
(86) International application number: PCT/JP2023/006388
(87) International publication number: WO 2024/176372

(57) **Abstract**

A drill (1) includes a body (10) that extends along a center axis (O), a cutting edge (15) that is located at a tip of the body (10), and a chip discharge groove (14) that extends from the cutting edge (15) toward a rear end side of the body (10). The body (10) has a first outer diameter section (21) and a second outer diameter section (22) having outer diameters different from each other. Both the first outer diameter section (21) and the second outer diameter section (22) have a back taper shape in which the outer diameter of the body gradually decreases from a tip side toward a rear end side. A taper amount of the first outer diameter section (21) is larger than a taper amount of the second outer diameter section (22). An outer diameter transition section (24) that is a smooth concave curved surface shape recessed toward a radially inner side of the body at a boundary portion between the first outer diameter section (21) and the second outer diameter section (22).

## Description

### TECHNICAL FIELD

The present invention relates to a drill.

The content of Japanese Patent Application No. 2021-160339, filed September 30, 2021, is incorporated herein by reference.

### BACKGROUND ART

In the related art, as disclosed in, for example, Patent Documents 1 to 3, a configuration is known in which a drill for deep hole machining has, from the point of view of chip discharge, a tapered shape in which a core thickness of a portion on a drill tip side gradually decreases from the drill tip side toward a shank side, and has a constant core thickness in a portion on the shank side from a predetermined position. Patent document 1 further discloses a configuration in which an outer diameter of a drill changes along an axial direction. Specifically, in the drill of Patent Document 1, the large-diameter portion located on the drill tip side has a shape of a back taper that decreases in diameter toward the shank side, and the small-diameter portion has a cylindrical shape with a constant diameter.

### CITATION LIST

### Patent Documents

Patent Document 1: Japanese Patent No. 3720010
Patent Document 2: United States Patent No. 9844819
Patent Document 3: Japanese Unexamined Patent Application, First Publication No. 2005-169600

### SUMMARY OF INVENTION

### Technical Problem

By making the outer diameter of a drill also have a shape that becomes thinner toward the shank side, as in the drill described in Patent Document 1, the chip discharge properties can be further improved. However, in a case where a step is provided at a boundary between the large-diameter portion and the small-diameter portion of the outer peripheral surface of a drill, there is a problem that stress is likely to be concentrated at a stepped portion where the shape changes rapidly.

### Solution to Problem

[Aspect 1] A drill according to Aspect 1 of the present invention is a drill to be rotated about a center axis, and the drill includes: a body that extends along the center axis; a cutting edge that is located at a tip of the body; and a chip discharge groove that extends from the cutting edge toward a rear end side of the body. The body has a first outer diameter section and a second outer diameter section having outer diameters different from each other, the first outer diameter section is located at a tip portion of the body, and the second outer diameter section is a section continuous to a rear end side of the first outer diameter section, and both the first outer diameter section and the second outer diameter section have a back taper shape in which an outer diameter of the body gradually decreases from a tip side toward a rear end side. A taper amount of the first outer diameter section is larger than a taper amount of the second outer diameter section, and an outer diameter transition section having a smooth concave curved surface shape recessed toward a radially inner side of the body is provided at a boundary portion between the first outer diameter section and the second outer diameter section.

According to this configuration, since both the first outer diameter section and the second outer diameter section have the back taper shape, a clearance between a workpiece and the body can be increased, so that sludge accumulation in a machined hole can be suppressed, and excellent chip discharge properties can be obtained.

In addition, the outer diameter transition section having the smooth concave curved surface shape that is recessed toward the radially inner side of the body is provided at a boundary portion between the first outer diameter section and the second outer diameter section. With this configuration, the taper amount can be gently changed in the outer diameter transition section, and thus, in a case of cutting operation using the drill, concentration of stress on a boundary portion between the first outer diameter section and the second outer diameter section can be suppressed. As a result, it is possible to obtain a drill having sufficient tool rigidity.

A groove length (a length along a center axis O direction) of the chip discharge groove may be in a range of 8.0D to 100D with respect to the outer diameter D of the cutting edge of the drill, and may be in a range of 30.0D to 80D or in a range of 8.0D to 30.0D.

[Aspect 2] In a drill of Aspect 2, in Aspect 1, an axial length of the outer diameter transition section may be 50% or less of an outer diameter of the cutting edge. According to this configuration, it is possible to relieve stress concentration in the outer diameter transition section while maintaining chip discharge properties.

[Aspect 3] In a drill of Aspect 3, in Aspect 1 or 2, the taper amount of the second outer diameter section may be 0.01/100 or greater. By setting this range, it is possible to prevent a rear end portion of the second outer diameter section from being excessively thin and to maintain the strength of the drill. The taper amount of the second outer diameter section may be 0.01/100 to 0.10/100.

[Aspect 4] In a drill of Aspect 4, in any one of Aspect 1 to 3, a web of the body may have a first core thickness section and a second core thickness section having core thicknesses different from each other, the first core thickness section may be located at a tip portion of the web, and the second core thickness section may be a section continuous to a rear end side of the first core thickness section, both the first core thickness section and the second core thickness section may have a back taper shape in which the core thickness gradually decreases from a tip side toward a rear end side, and a taper amount of the first core thickness section may be larger than a taper amount of the second core thickness section.

According to this configuration, in the body having the first outer diameter section and the second outer diameter section, both of which have the back taper shape, it is easy to form the chip discharge groove having a depth equal to or greater than a certain depth over almost the entire groove length. As a result, the clearance can be prevented from being clogged with chips from the chip discharge groove, and the chips can be smoothly discharged. For example, the taper amount of the first core thickness section may be in a range of 0.10/100 to 0.50/100, and the taper amount of the second core thickness section may be in a range of 0.01/100 to 0.08/100.

[Aspect 5] In a drill of Aspect 5, in any one of Aspects 1 to 4, a core thickness transition section having a smooth concave curved surface shape recessed toward a radially inner side of the web may be provided at a boundary portion between the first core thickness section and the second core thickness section.

With this configuration, the taper amount of the web can be gently changed in the core thickness transition section, and thus, during the cutting operation using a drill, chips are less likely to be caught at the boundary portion between the first core thickness section and the second core thickness section. As a result, chip discharge properties can be further improved.

[Aspect 6] In a drill of Aspect 6, in any one of Aspects 1 to 5, an axial position of the core thickness transition section may overlap an axial position of the outer diameter transition section.

According to this configuration, a position where the taper amount of the outer diameter of the body changes and a position where the taper amount of the core thickness of the web changes coincide with each other in the axial direction. As a result, a change in the depth of the chip discharge groove in the axial direction can be suppressed, and chips can be smoothly discharged.

[Aspect 7] In a drill of Aspect 7, in any one of Aspects 1 to 6, the taper amount of the second core thickness section is 0.01/100 or greater. By setting this range, it is possible to prevent the rear end portion of the second core thickness section from becoming excessively thin and to maintain the strength of the drill. The taper amount of the second core thickness section may be 0.01/100 to 0.10/100.

[Aspect 8] In a drill of Aspect 8, in any one of Aspects 1 to 7, the body may have a margin extending from an outer peripheral end of the cutting edge to a rear end side along an end edge of the chip discharge groove, and an end portion of the margin on the rear end side may be located within the second outer diameter section.

According to this configuration, since a relieving surface serving as a flow path of a coolant can be extended to the rear end side, the coolant can be easily flowed into the clearance between the workpiece and the body, and the sludge accumulation can be suppressed.

[Aspect 9] In a drill of Aspect 9, in any one of Aspects 1 to 8, an axial length of the first outer diameter section may be 3 times or greater and 12 times or less an outer diameter of the cutting edge. By setting this range, it is easy to manage the taper amount in the first outer diameter section. In addition, it is possible to suppress the outer diameter of the first outer diameter body from becoming excessively small. The axial length of the first outer diameter section may be 5 times or greater and 9 times or less the outer diameter of the cutting edge. In particular, the ratio may be 5 times or greater and 12 times or less in a case where the outer diameter of the cutting edge is less than 3 mm.

[Aspect 10] In a drill of Aspect 10, in any one of Aspects 1 to 9, a groove length of the chip discharge groove is 13 times or greater an outer diameter of the cutting edge. In this case, in the drill in which chip clogging is likely to occur, the chip discharge properties can be further improved. The groove length of the chip discharge groove may be 20 times to 100 times an outer diameter of the cutting edge.

### ADVANTAGEOUS EFFECTS OF INVENTION

According to the drill of each aspect of the present invention, it is possible to improve chip discharge properties while maintaining tool rigidity.

### BRIEF DESCRIPTION OF DRAWINGS

[FIG. 1] FIG. 1(a) is a side view of a drill of an embodiment, and FIG. 1(b) is a schematic cross-sectional view showing a chip discharge groove as a straight groove.
[FIG. 2] FIG. 2 is an enlarged partial side view showing a tip portion of the drill of the embodiment.
[FIG. 3] FIG. 3 is a front view of the drill of the embodiment.
[FIG. 4] FIG. 4 is a view showing a vicinity of the boundary section of FIG. 1(b) in an enlarged manner.
[FIG. 5] FIG. 5(a) is a side view showing a body of a drill of a modification example, and FIG. 5(b) is a schematic cross-sectional view showing a chip discharge groove of the drill of the modification example as a straight groove.

### DESCRIPTION OF EMBODIMENTS

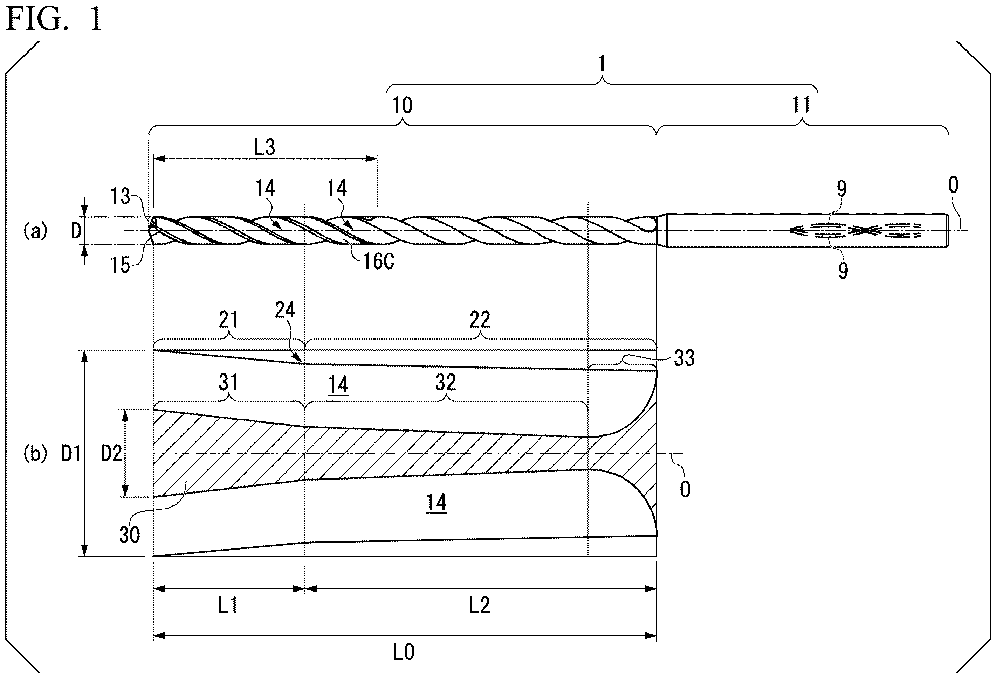

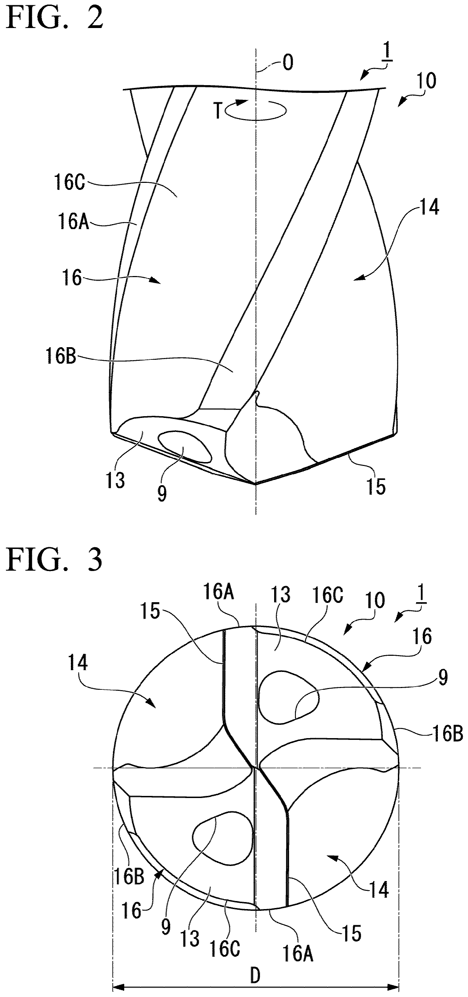

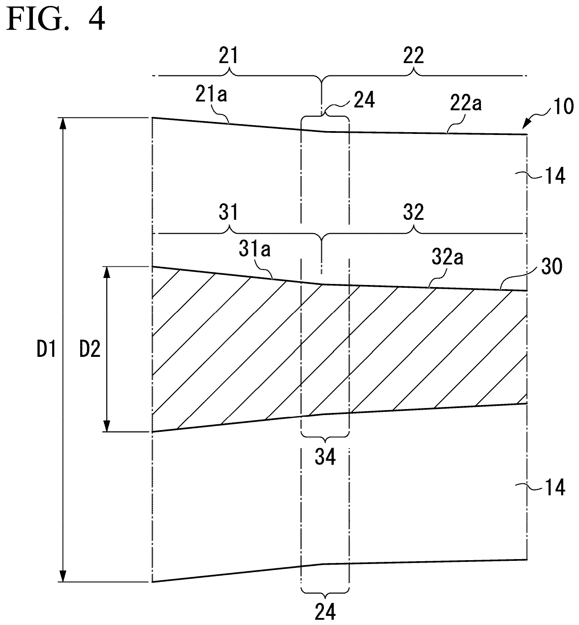

FIG. 1(a) is a side view of a drill of the present embodiment. FIG. 1(b) is a schematic cross-sectional view showing the chip discharge groove as a straight groove. FIG. 2 is an enlarged partial side view showing a tip portion of the drill of the present embodiment. FIG. 3 is a front view of the drill of the present embodiment. FIG. 4 is a view showing a vicinity of the boundary section of FIG. 1(b) in an enlarged manner.

A drill 1 of the present embodiment is a drill for deep hole machining.

The drill 1 has a substantially cylindrical shape with a center axis O as a center. The drill 1 has a body 10 and a shank 11 each extending along the center axis O. The drill 1 performs perforation on the workpiece by rotating a tip surface of the body 10 toward a workpiece and around the center axis O.

The drill 1 of the present embodiment is a solid drill having a base material made of a hard alloy or the like. The drill 1 may have a hard coating film made of a metal nitride or the like that coats the surface of the base material.

A direction (a direction in which the center axis O extends) along the center axis O of the drill 1 is referred to as an axial direction. In the axial direction, a direction from the shank 11 to the body 10 is referred to as a tip side, and a direction from the body 10 to the shank 11 is referred to as a rear end side.

A direction orthogonal to the center axis O is referred to as a radial direction. In the radial direction, a direction approaching the center axis O is referred to as a radially inner side, and a direction away from the center axis O is referred to as a radially outer side.

A direction rotating around the center axis O is referred to as a circumferential direction. In addition, in the circumferential direction, a direction in which the body 10 rotates during the drilling is referred to as a rotation direction front side, and an opposite side thereof is referred to as a rotation direction rear side.

The body 10 has a pair of cutting edges 15 and 15 positioned at a tip of the body 10, and a pair of chip discharge grooves 14 and 14 extending in a spiral shape along the outer periphery of the body 10 from the cutting edges 15 and 15 toward the rear end side.

In the drill 1, two coolant holes 9 are formed to be symmetrical with respect to the center axis O and twisted with the same lead as the chip discharge groove 14 from the rear end surface of the shank 11 toward the tip side. The coolant holes 9 pass between the chip discharge grooves 14 in the body 10 and are each opened on a tip flank 13. During the drilling operation using the drill 1, a coolant such as cutting oil or compressed air is ejected from the two coolant holes 9. In addition, the tip flank 13 is formed by two-stage flanks of which an escape angle increases toward a side opposite to a drill rotation direction T. The coolant hole 9 is open to a flank on a side opposite to the drill rotation direction T of the two-stage flanks.

The chip discharge groove 14 is twisted in the rear side of the drill rotation direction T from the cutting edge 15 toward the rear end side in the center axis O direction at a constant twisted angle on the outer periphery of the body 10. The pair of chip discharge grooves 14 and 14 are disposed symmetrically with respect to the center axis O. A groove length L0 (length along the center axis O direction) of the chip discharge groove 14 is in a range of 8.0D to 30.0D with respect to an outer diameter D of the cutting edge 15 of the drill 1. The groove length L0 (length along the center axis O direction) of the chip discharge groove 14 may be in a range of 20D to 100D with respect to the outer diameter D of the cutting edge 15 of the drill 1. The outer diameter of the cutting edge 15 is the outer diameter of a circle formed by the rotation locus of the cutting edge 15 about the center axis O at the outer peripheral end of the cutting edge 15, that is, the drill diameter.

The cutting edges 15 and 15 are formed at an intersection ridge portion between the inner wall surfaces of the pair of chip discharge grooves 14 and 14 facing the front side in the drill rotation direction T and the tip flank 13 at the tip of the body 10. The pair of cutting edges 15 and 15 are disposed symmetrically with respect to the center axis O. The cutting edge 15 extends to the rear end side as it goes toward the outer peripheral side (radially outer side) of the body 10, and a tip angle is given.

As shown in FIG. 1(b), the body 10 has a first outer diameter section 21 and a second outer diameter section 22 having outer diameters different from each other in the axial direction. In FIG. 1(b), the outer diameter and the core thickness of the body 10 are shown with the chip discharge groove 14 as a straight groove.

As shown in FIG. 1(b), the first outer diameter section 21 is located at the tip portion of the body 10, and the second outer diameter section 22 is a section that is continuous to the rear end side of the first outer diameter section 21. Both the first outer diameter section 21 and the second outer diameter section 22 have a back taper shape in which an outer diameter D1 of the body 10 gradually decreases from the tip side toward the rear end side.

A taper amount of the first outer diameter section 21 is larger than a taper amount of the second outer diameter section 22. That is, the amount of change in the outer diameter D1 of both ends of the first outer diameter section 21 with respect to the axial length of the first outer diameter section 21 is larger than the amount of change in the outer diameter D1 of both ends of the second outer diameter section 22 with respect to the axial length of the second outer diameter section 22. With this configuration, excessive vanishing by the tip portion of the body 10 can be suppressed, and the chip discharge properties can also be improved. The taper amount of the first outer diameter section 21 is, for example, in a range of 0.1/100 to 1.0/100, and may be 0.1/100 to 0.5/100. The taper amount of the second outer diameter section 22 is, for example, in a range of 0.01/100 to 0.1/100, and may be 0.01/100 to 0.08/100.

The taper amount of the second outer diameter section 22 is preferably 0.01/100 or greater. By setting the range, for example, even in a long drill 1 in which an axial length L2 of the second outer diameter section 22 is about 50 times the outer diameter D of the cutting edge 15, it is possible to prevent the end portion of the second outer diameter section 22 on the shank 11 side from becoming excessively thin while ensuring the back taper shape, and to maintain the strength of the drill 1.

As shown in the enlarged view of FIG. 4, the drill 1 of the present embodiment has an outer diameter transition section 24 having a smooth concave curved surface shape recessed toward the radially inner side of the body 10 at a boundary portion between the first outer diameter section 21 and the second outer diameter section 22. That is, the first outer diameter section 21 and the second outer diameter section 22 are smoothly connected to each other in the axial direction without a step. In the outer diameter transition section 24, the taper angle of the outer peripheral surface continuously changes from the first outer diameter section 21 toward the second outer diameter section 22.

In the case of the present embodiment, in a section (straight line section 21a) of the first outer diameter section 21 excluding the outer diameter transition section 24, the outer diameter D1 decreases toward the drill rear end at a substantially constant rate. In addition, even in a section (straight line section 22a) of the second outer diameter section 22 excluding the outer diameter transition section 24, the outer diameter D1 decreases toward the drill rear end at a substantially constant ratio. The outer diameter transition section 24 is a section in which the taper angle of the outer peripheral surface continuously changes from the taper angle of the straight line section 21a to the taper angle of the straight line section 22a. Therefore, the taper angle of the outer diameter transition section 24 is in an angular range equal to or greater than the taper angle of the straight line section 22a and equal to or less than the taper angle of the straight line section 21a.

The axial length of the outer diameter transition section 24 is preferably 50% or less of the outer diameter of the cutting edge 15. According to this configuration, it is possible to relieve stress concentration in the outer diameter transition section 24 while maintaining chip discharge properties. In a case where the taper angles of the straight line sections 21a and 22a are fixed and the axial length of the outer diameter transition section 24 is increased, the outer diameter D1 in the outer diameter transition section 24 is increased, so that the gap between the wall surface of the machined hole and the outer peripheral surface of the body 10 is reduced, and the chip discharge properties tend to be deteriorated.

In the present embodiment, the axial length L1 of the first outer diameter section 21 is preferably 3 times or greater and 12 times or less the outer diameter D of the cutting edge 15. In a case where the axial length L1 is 3 times or less the outer diameter D of the cutting edge 15, the first outer diameter section 21 is too short, and thus it is difficult to manage the back taper amount in the first outer diameter section 21, and the manufacturability is deteriorated. Meanwhile, in a case where the axial length L1 exceeds 12 times the outer diameter D of the cutting edge 15, the reduction width of the outer diameter D1 at the rear end of the first outer diameter section 21 is excessive, and it is difficult to maintain the tool strength. Alternatively, in a case where the taper amount of the first outer diameter section 21 is reduced in order to prevent a decrease in strength, the taper amount of the second outer diameter section 22 is further reduced, and thus the effect of improving the chip discharge properties by the second outer diameter section 22 having the back taper shape is reduced. The axial length L1 may be 5 times or greater and 9 times or less the outer diameter D of the cutting edge 15. In particular, in a case where the outer diameter D of the cutting edge 15 is less than 3 mm, the axial length L1 may be 5 times or greater and 12 times or less the outer diameter D of the cutting edge 15.

The configuration of the present embodiment is a configuration suitable for a drill in which the groove length L0 is 13D or greater with respect to the outer diameter D of the cutting edge 15. The drill in which the groove length L0 is 13D or greater is used for machining in which the hole depth is 10 times or greater with respect to the outer diameter D of the cutting edge 15. In such deep hole machining, chip clogging is likely to occur significantly. According to the drill 1 of the present embodiment, the above-described excellent chip discharge properties can solve the problem of chip discharge in deep hole machining applications of 10D or greater.

In the present embodiment, a web 30 of the body 10 has a first core thickness section 31 and a second core thickness section 32 having a core thickness D2 different from each other. A groove cut-up section 33 of the rear end portion of the chip discharge groove 14 is continuous on the shank 11 side of the second core thickness section 32.

The core thickness D2 of the body 10 is the thickness (diameter) of the web 30 formed by the bottom portion of the chip discharge groove 14. The first core thickness section 31 is located at the tip portion of the web 30, and the second core thickness section 32 is continuous with the rear end side of the first core thickness section 31. Both the first core thickness section 31 and the second core thickness section 32 have a back taper shape in which the core thickness D2 gradually decreases from the tip side toward the rear end side. The groove cut-up section 33 is a terminal end portion of the chip discharge groove 14, and is a section in which the chip discharge groove 14 becomes shallower toward the rear end of the drill.

The taper amount of the first core thickness section 31 is larger than the taper amount of the second core thickness section 32. That is, the amount of change in the core thickness D2 at both ends of the first core thickness section 31 with respect to the axial length of the first core thickness section 31 is larger than the amount of change in the core thickness D2 at both ends of the second core thickness section 32 with respect to the axial length of the second core thickness section 32. With this configuration, it is possible to prevent the depth of the chip discharge groove 14 in the first outer diameter section 21 and the depth of the chip discharge groove 14 in the second outer diameter section 22 from being significantly different from each other.

The taper amount of the first core thickness section 31 is, for example, in a range of 0.1/100 to 1.0/100. The taper amount of the second core thickness section 32 is, for example, in a range of 0.01/100 to 0.1/100. The taper amount of the second core thickness section 32 is preferably 0.01/100 or greater. By setting the range, it is possible to prevent the end portion of the second core thickness section 32 on the shank 11 side from becoming excessively thin and to maintain the strength of the drill 1. The taper amount of the first core thickness section 31 may be, for example, in a range of 0.10/100 to 0.50/100, and the taper amount of the second core thickness section 32 may be, for example, in a range of 0.01/100 to 0.08/100.

As shown in the enlarged view of FIG. 4, the drill 1 of the present embodiment has a core thickness transition section 34 that is a smooth concave curved surface shape recessed toward the radially inner side of the web 30 at a boundary portion between the first core thickness section 31 and the second core thickness section 32. That is, the first core thickness section 31 and the second core thickness section 32 are smoothly connected to each other without a step in the axial direction. In the core thickness transition section 34, the taper angle of the web 30 continuously changes from the first core thickness section 31 toward the second core thickness section 32.

In the case of the present embodiment, in a section (straight line section 31a) of the first core thickness section 31 excluding the core thickness transition section 34, the core thickness D2 decreases toward the drill rear end at a substantially constant ratio. In addition, even in a section (straight line section 32a) of the second core thickness section 32 excluding the core thickness transition section 34, the core thickness D2 decreases toward the drill rear end at a substantially constant ratio. The core thickness transition section 34 is a section in which the taper angle of the web 30 continuously changes from the taper angle of the straight line section 31a to the taper angle of the straight line section 32a. Therefore, the taper angle of the core thickness transition section 34 is in an angular range of equal to or greater than the taper angle of the straight line section 32a and equal to or less than the taper angle of the straight line section 31a.

The axial length of the core thickness transition section 34 is preferably 50% or less of the outer diameter of the cutting edge 15. With this configuration, it is easy to obtain good chip discharge properties. In a case where the taper angles of the straight line sections 31a and 32a are fixed and the axial length of the core thickness transition section 34 is increased, the core thickness D2 in the core thickness transition section 34 is increased, and thus the depth of the chip discharge groove 14 is decreased, and the chip discharge properties tend to be deteriorated.

In the drill 1 of the present embodiment having the above-described configuration, the body 10 is rotated about the center axis O and is fed toward the tip side in the center axis O direction, and thus the workpiece is cut by the cutting edges 15 and 15 positioned at the tip of the body 10 to form the machined hole in the workpiece. The chips generated from the cutting edges 15 and 15 are discharged toward the rear end side in the center axis O direction in the chip discharge grooves 14 and 14.

In the present embodiment, both the first outer diameter section 21 and the second outer diameter section 22 have the back taper shape in which the outer diameter D1 gradually decreases from the drill tip toward the shank 11. With this configuration, the clearance between the workpiece and the body 10 can be increased, so that sludge accumulation in the machined hole can be suppressed, and excellent chip discharge properties can be obtained.

In addition, in the present embodiment, the outer diameter transition section 24 having a smooth concave curved surface shape that is recessed toward the radially inner side of the body 10 is provided at a boundary portion between the first outer diameter section 21 and the second outer diameter section 22. With this configuration, the taper amount can be gently changed in the outer diameter transition section 24. Therefore, in a case of cutting operation using the drill 1, it is possible to suppress concentration of stress on the boundary portion between the first outer diameter section 21 and the second outer diameter section 22. As a result, the drill 1 having sufficient tool rigidity can be obtained.

In addition, in the present embodiment, both the first core thickness section 31 and the second core thickness section 32 of the web 30 have the back taper shape in which the core thickness D2 gradually decreases from the drill tip toward the shank 11. According to this configuration, in the body 10 having the first outer diameter section 21 and the second outer diameter section 22 having the back taper shape, it is easy to form the chip discharge groove 14 having a depth equal to or greater than a certain depth over almost the entire groove length L0. As a result, the clearance can be prevented from being clogged with chips discharged from the chip discharge groove 14, and the chips can be smoothly discharged.

In addition, in the present embodiment, the core thickness transition section 34 having a smooth concave curved surface shape that is recessed toward the radially inner side of the web 30 is provided at the boundary portion between the first core thickness section 31 and the second core thickness section 32. With this configuration, in the core thickness transition section 34, the taper amount of the web 30 can be gently changed. Therefore, during the cutting operation using the drill 1, chips are less likely to be caught at the boundary portion between the first core thickness section 31 and the second core thickness section 32. As a result, it is possible to obtain further improved chip discharge properties.

In the present embodiment, as shown in FIG. 4, the axial positions of the core thickness transition section 34 and the outer diameter transition section 24 overlap each other. According to this configuration, the position at which the taper amount of the outer diameter D1 of the body 10 changes coincides with the position at which the taper amount of the core thickness D2 of the web 30 changes in the axial direction. As a result, a change in the depth of the chip discharge groove 14 in the axial direction can be suppressed, and chips can be smoothly discharged.

Further, in the case of the present embodiment, the taper amount of the outer diameter D1 of the first outer diameter section is substantially the same as the taper amount of the core thickness D2 of the first core thickness section 31. The taper amount of the outer diameter D1 of the second outer diameter section 22 and the taper amount of the core thickness D2 of the second core thickness section 32 are substantially the same. According to this configuration, the depth of the chip discharge groove 14 can be made substantially constant over the entire first core thickness section 31 and the entire second core thickness section 32. The chips are less likely to be clogged inside the chip discharge groove 14.

It should be noted that the taper amount of the outer diameter D1 of the first outer diameter section and the taper amount of the core thickness D2 of the first core thickness section 31 can also be made different from each other. In addition, the taper amount of the outer diameter D1 of the second outer diameter section 22 and the taper amount of the core thickness D2 of the second core thickness section 32 can be made different from each other. That is, the depth distribution of the chip discharge groove 14 in the axial direction may be adjusted by making the taper amounts of the outer diameter D1 and the core thickness D2 different from each other.

The body 10 has lands 16 and 16 between two chip discharge grooves 14 and 14. A first margin 16A is provided at an end portion of the land 16 on the front side in the drill rotation direction T. A second margin 16B is provided at an end portion of the land 16 on the rear side in the drill rotation direction T. The first margin 16A and the second margin 16B extend in a spiral shape along the end edge of the chip discharge groove 14. The body 10 has a relieving surface 16C that is recessed radially inner side between the first margin 16A and the second margin 16B.

The first margin 16A and the second margin 16B are formed only on the tip part of the body 10. In the present embodiment, an axial length L3 of the relieving surface 16C shown in FIG. 1 is about 40% of the groove length L0 of the chip discharge groove 14. In the drill 1 of the present embodiment, an end portion of the first margin 16A on the rear end side or an end portion of the relieving surface 16C on the rear end side is located within the section of the second outer diameter section 22. According to this configuration, since the relieving surface 16C serving as a flow path of the coolant can be extended to the rear end side, the coolant can be easily flowed into the clearance between the workpiece and the body 10, and the sludge accumulation can be suppressed.

The rear end position of the first margin 16A or the relieving surface 16C in the second outer diameter section 22 can be appropriately changed. In the drill 1 of the present embodiment, since the second outer diameter section 22 has the back taper shape, even in a case where the axial length L3 of the relieving surface 16C is relatively short, the coolant is likely to flow into the clearance of the second outer diameter section 22. By shortening the axial length L3 of the relieving surface 16C, the thickness of the land 16 can be secured, and the tool rigidity is easily maintained. The rear end position of the first margin 16A or the relieving surface 16C can be, for example, a position of 5% to 40% or a position of 10% to 30% of the axial length L2 of the second outer diameter section 22 from the tip position of the second outer diameter section 22.

The configurations of the first margin 16A and the second margin 16B are not limited to the present embodiment. For example, in a case where the clearance between the workpiece and the body 10 can be increased, the end portion of the first margin 16A or the relieving surface 16C on the rear end side may be disposed within the section of the first outer diameter section 21. In addition, the second margin 16B may be provided as necessary, and the body 10 may be configured not to include the second margin 16B.

### (Modification Example)

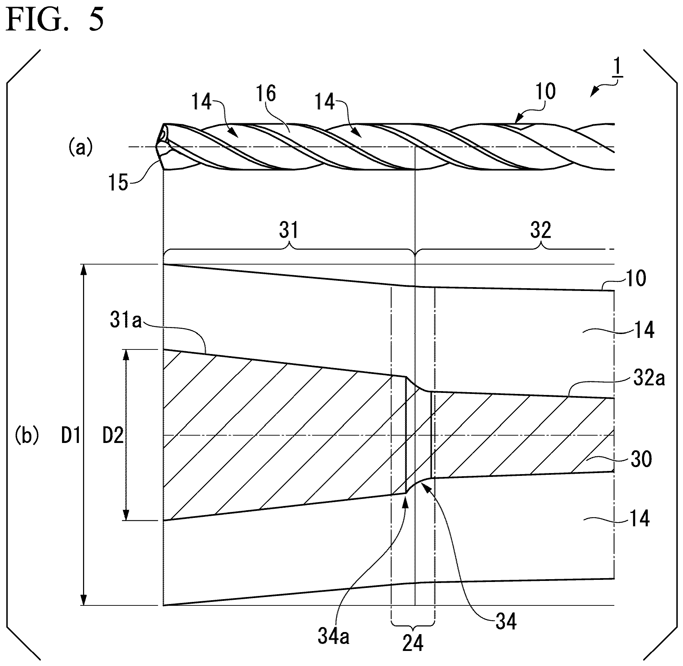

FIG. 5(a) is a side view showing a body 10 of a drill 1 of a modification example. FIG. 5(b) is a schematic cross-sectional view showing a chip discharge groove 14 of the drill 1 of the modification example as a straight groove.

In the drill 1 shown in FIG. 5, the shape of a core thickness transition section 34 in a web 30 is different from the shape shown in FIGS. 1 to 4.

Specifically, the core thickness transition section 34 of the modification example is smoothly connected to the straight line section 32a of the second core thickness section 32 without a step, but is connected to the straight line section 31a of the first core thickness section 31 on the tip side via a step 34a.

In the drill 1 of the modification example, the taper angle, which is the inclination angle with respect to the center axis O, increases as the core thickness transition section 34 approaches the tip side (straight line section 31a side). The taper angle of the core thickness transition section 34 is maximum at a connection portion between the core thickness transition section 34 and the straight line section 31a. The taper angle of the core thickness transition section in the connection portion between the core thickness transition section 34 and the straight line section 31a is larger than the taper angle of the straight line section 31a. Meanwhile, the taper angle of the core thickness transition section 34 coincides with the taper angle of the straight line section 32a in the connection portion with the straight line section 32a on the rear end side.

In the configuration of the present modification example, the step 34a is provided on the tip side of the core thickness transition section 34, but the wall surface of the step faces the rear end side of the drill 1. Since the chips generated by the cutting edge 15 move in the chip discharge groove 14 from the drill tip to the rear end, the step 34a hardly hinders the movement of the chips. According to the configuration of the present modification example, since the end portion of the core thickness transition section 34 on the tip side has the step, the depth of the chip discharge groove 14 can be secured to be large in the second core thickness section 32. As a result, it is easy to discharge the chip that has entered the second core thickness section 32 to the rear end side.

In addition, by providing the step 34a in the core thickness transition section 34, the axial length of the core thickness transition section 34 can be shortened. As a result, the axial length of any one or both of the straight line section 31a of the first core thickness section 31 and the straight line section 32a of the second core thickness section 32 can be increased. The taper amount of the straight line sections 31a and 32a is easily managed, and the manufacturability is improved.

The shape of the outer diameter transition section 24 of the present modification example is common to the shape of the embodiment shown in FIGS. 1 and 4. Therefore, even in a case of performing the cutting operation using the drill 1 of the modification example, it is possible to suppress the concentration of stress in the outer diameter transition section 24.

Even in the present modification example, the axial position of the core thickness transition section 34 overlaps the axial position of the outer diameter transition section 24. A position where the taper angle of the outer diameter D1 changes and a position where the taper angle of the core thickness D2 changes coincide with each other. The depth of the chip discharge groove 14 is substantially constant in each of the first core thickness section 31 and the second core thickness section 32. The behavior of the chips moving inside the chip discharge groove 14 is likely to be stabilized.

### INDUSTRIAL APPLICABILITY

According to the present invention, there is provided a drill in which chip discharge properties are improved while tool rigidity is maintained. As a result, the present invention can be industrially applicable.

### REFERENCE SIGNS LIST

1 Drill
9 Coolant hole
10 Body
11 Shank
13 Tip flank
14 Chip discharge groove
15 Cutting edge
16 Land
16A First margin
16B Second margin
16C Relieving surface
21 First outer diameter section
21a, 22a, 31a, 32a Straight line section
22 Second outer diameter section
24 Outer diameter transition section
30 Web
31 First core thickness section
32 Second core thickness section
33 Groove cut-up section
34 Core thickness transition section
34a Step
D Outer diameter of cutting edge
D1 Outer diameter
D2 Core thickness
L0 Groove length
L1, L2, L3 Axial length
O Center axis
T Drill rotation direction

## Claims

1. A drill to be rotated about a center axis, the drill comprising:
a body that extends along the center axis;
a cutting edge that is located at a tip of the body; and
a chip discharge groove that extends from the cutting edge toward a rear end side of the body,
wherein the body has a first outer diameter section and a second outer diameter section having outer diameters different from each other,
the first outer diameter section is located at a tip portion of the body, and the second outer diameter section is a section continuous to a rear end side of the first outer diameter section,
both the first outer diameter section and the second outer diameter section have a back taper shape in which an outer diameter of the body gradually decreases from a tip side toward a rear end side,
a taper amount of the first outer diameter section is larger than a taper amount of the second outer diameter section, and
an outer diameter transition section having a smooth concave curved surface shape recessed toward a radially inner side of the body is provided at a boundary portion between the first outer diameter section and the second outer diameter section.

2. The drill according to Claim 1,
wherein an axial length of the outer diameter transition section is 50% or less of an outer diameter of the cutting edge.

3. The drill according to Claim 1 or 2,
wherein the taper amount of the second outer diameter section is 0.01/100 or greater.

4. The drill according to any one of Claims 1 to 3,
wherein a web of the body has a first core thickness section and a second core thickness section having core thicknesses different from each other,
the first core thickness section is located at a tip portion of the web, and the second core thickness section is a section continuous to a rear end side of the first core thickness section,
both the first core thickness section and the second core thickness section have a back taper shape in which the core thickness gradually decreases from a tip side toward a rear end side, and
a taper amount of the first core thickness section is larger than a taper amount of the second core thickness section.

5. The drill according to Claim 4,
wherein a core thickness transition section having a smooth concave curved surface shape recessed toward a radially inner side of the web is provided at a boundary portion between the first core thickness section and the second core thickness section.

6. The drill according to Claim 5,
wherein an axial position of the core thickness transition section overlaps an axial position of the outer diameter transition section.

7. The drill according to any one of Claims 4 to 6,
wherein the taper amount of the second core thickness section is 0.01/100 or greater.

8. The drill according to any one of Claims 1 to 7,
wherein the body has a margin extending from an outer peripheral end of the cutting edge to a rear end side along an end edge of the chip discharge groove, and
an end portion of the margin on the rear end side is located within the second outer diameter section.

9. The drill according to any one of Claims 1 to 8,
wherein an axial length of the first outer diameter section is 3 times or greater and 12 times or less an outer diameter of the cutting edge.

10. The drill according to any one of Claims 1 to 9,
wherein a groove length of the chip discharge groove is 13 times or greater an outer diameter of the cutting edge.
